(19) Europäisches Patentamt

European Patent Office

Office européen des brevets

(11) **EP 1 158 425 A2**

(12) **EUROPEAN PATENT APPLICATION**

(43) Date of publication:
**28.11.2001 Bulletin 2001/48**

(51) Int Cl.⁷: **G06F 17/30**

(21) Application number: **00403117.5**

(22) Date of filing: **09.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.05.2000 KR 2000027412**

(71) Applicant: **Miraenet Co., Ltd.**
**Kangnam-Gu, Seoul (KR)**

(72) Inventors:
• **Lee, Jong Su**
**Kangnam-Gu, Seoul (KR)**

• **Park, Jong-Soon**
**Kangnam-Gu, Seoul (KR)**
• **Lee, Young-Suk**
**Kangnam-Gu, Seoul (KR)**
• **Kwon, Yong-Hwa**
**Kangnam-Gu, Seoul (KR)**
• **Kim, Hak-Jung**
**Kangnam-Gu, Seoul (KR)**
• **Sung, Ki-Hun**
**Kangnam-Gu, Seoul (KR)**

(74) Representative: **Schrimpf, Robert et al**
**Cabinet Regimbeau**
**20, rue de Chazelles**
**75847 Paris cedex 17 (FR)**

(54) **Integrated web site searching method in communication network and medium for storing software programmed to perform the method**

(57) Disclosed is an integrated web site searching method in a communication network and a medium wherein software programmed to perform the method is stored. A plurality of selectable search service web sites are presented to a user, and if the user selects at least one search service web site and inputs a search word, the search word and a search request signal are transmitted to the selected search service web sites through an information communication network. The search results received from the respective search service web sites are restructured to a specified pattern by parsing, and the restructured search results are displayed to the user and stored in an auxiliary storage device of a user's terminal as well. Thus, the time and effort required for searching the web sites having desired information using a plurality of search service web sites can be reduced and the very convenient search can be achieved. Also, since the accuracy and reliability for the search results are guided in advance to the user by performing the validity test of the web sites searched by the respective search service web sites, the waste of time caused by the connection to the web site that does not actually exist can be prevented, and thus the information search can be effected more easily.

EP 1 158 425 A2

**Description**

BACKGROUND OF THE INVENTION

Field of the Invention

The present invention relates to an integrated web site searching method in a communication network that connects to respective web sites for providing search services, performs an integrated search, and provides a result of search to a user, and a medium wherein a software programmed to perform the method is stored.

Description of the Related Art

A communication user, who collects information as he/she is surfing web sites through an information communication network such as Internet, generally uses so called a search engine of a search service web site that provides a search service for titles of web sites or the document contents of home pages to search the web sites that provides information contents desired by the user.

The search engine as described above provides the search service for searching the web sites having the information desired to be searched by the user. Specifically, if the communication user, who has visited the search service web site, inputs a search word or search formula through a user interface screen provided by the corresponding search engine, the search engine operates in such a manner that it searches the titles of web sites or the document contents of home pages scattered in the information communication network, and provides a list of web sites including the information contents required by the communication user.

At present, a great number of search service web sites are operating, named, for example, "Alta Vista", "Yahoo", "Lycos", "Infoseek", "Magellan", "Metasearch", "Search.com", "Excite", "Web Crawler", etc.

The search service web site is briefly classified into two types in accordance with its data collection method. One is a directory type search service web site (for instance, "Yahoo") whereby an information search expert searches important web sites individually, and registers the titles of the web sites or the document contents of the home pages in a database. The other is an automatic search type search service web site (for instance, "Alta Vista") whereby a search robot effected by software goes around the information network along linkages of the respective web sites, and registers the obtained information in a database.

As described above, since the data collection methods are different for the respective search service web sites, and domain names or communication protocol addresses (for example, IP address) of the web sites registered in a database of a web server that operates the respective search service web sites may be changed or become extinct, it is very difficult for the communication user to search all the desired information using one search service web site.

Accordingly, the communication user searches information commonly using several search service web sites. In this case, it requires much time and effort to individually search the respective search service web sites and to input effective search words and search formulas for the respective search engines of the search service web sites.

Also, since the search result searched using the respective search service web sites disappears simultaneously with the 'off' state of a browser, the same search using the search service web sites should be repeatedly performed in order to find out the previous search result, thereby causing inconvenience to the user.

SUMMARY OF THE INVENTION

Therefore, the present invention solves the problems as described above. An object of the present invention is to provide an integrated web site searching method in a communication network, which can search information desired by a user simultaneously through a plurality of search service web sites selected by the user, integrate search results searched by the respective search service web sites, provide the integrated search result to the user, and store the search result in a storage device of a user terminal, and a medium wherein a software programmed to perform the method is stored.

To achieve the object, in one aspect of the present invention, there is provided an integrated web site searching method in a communication network, the method comprising steps of : receiving a user input of a search word and selecting at least one search service web site desired by the user; transmitting the search word and a search request signal to the respective search service web sites selected by the user through an information communication network; receiving search results, which are information of web sites searched in relation to the search word by the respective search service web sites, from the respective search service web sites; integrating the search results received from the respective search service web sites; and displaying the integrated search results to the user and storing the integrated search results in a storage device of a user terminal.

In another aspect of the present invention, there is provided a medium wherein a software programmed to perform an integrated web site searching method in a communication network is stored, the method comprising steps of : displaying a user interface screen for presenting a list of search service web sites that can be selected by a user and permitting the user to input a search word; transmitting the search word and a search request signal to the respective search service web sites selected by the user through an information communication network by controlling a network adapter of a user terminal; and integrating search results, which are information of web sites searched in relation to the search word by the respective search service web sites, received from the respective selected search service web sites and; displaying the integrated search results to the user and storing the integrated search results in a storage device of a user terminal.

BRIEF DESCRIPTION OF THE DRAWINGS

The above object, and other features and advantages of the present invention will become more apparent after a reading of the following detailed description when taken in conjunction with the drawings, in which:

FIG. 1 is a view illustrating a communication system incorporating the present invention;
FIGs. 2A to 2C are flowcharts illustrating the operation process of a web site searching method in a communication network according to a preferred embodiment of the present invention;
FIG. 3 is a view illustrating a user interface screen for representing a process of updating an integrated search program according to an embodiment of the present invention;
FIG. 4 is a view illustrating a user interface screen for determining a search word, search service web site, and search mode when performing the integrated search according to an embodiment of the present invention;
FIG. 5 is a view illustrating a user interface screen for representing an integrated search process according to an embodiment of the present invention;
FIGs. 6A and 6B are schematic views illustrating the structure of the integrated search result according to an embodiment of the present invention;
FIG. 7 is a view illustrating a user interface screen that represents the integrated search result according to an embodiment of the present invention;
FIG. 8 is a view illustrating a user interface screen for inquiring of the user whether to perform a validity test according to an embodiment of the present invention;
FIG. 9 is a view illustrating a user interface screen that represents the process of performing the validity test according to an embodiment of the present invention;
FIG. 10 is a view illustrating a user interface screen that represents the validity test result according to an embodiment of the present invention;
FIG. 11 is a view illustrating a user interface screen for an integrated search program through which a web surfing is performed;
FIGs. 12 and 13 are views illustrating examples of book-marking the searched web site on a private search data list or on a preference search list (i.e., favorites), or editing the respective information according to an embodiment of the present invention; and
FIG. 14 is a flowchart explaining a method of updating an integrated search program according to another embodiment of the present invention.

DETAILED DESCRIPTION OF THE PREFERRED EMBODIMENTS

Hereinafter, preferred embodiments of the present invention will be explained in detail with reference to the accompanying drawings.

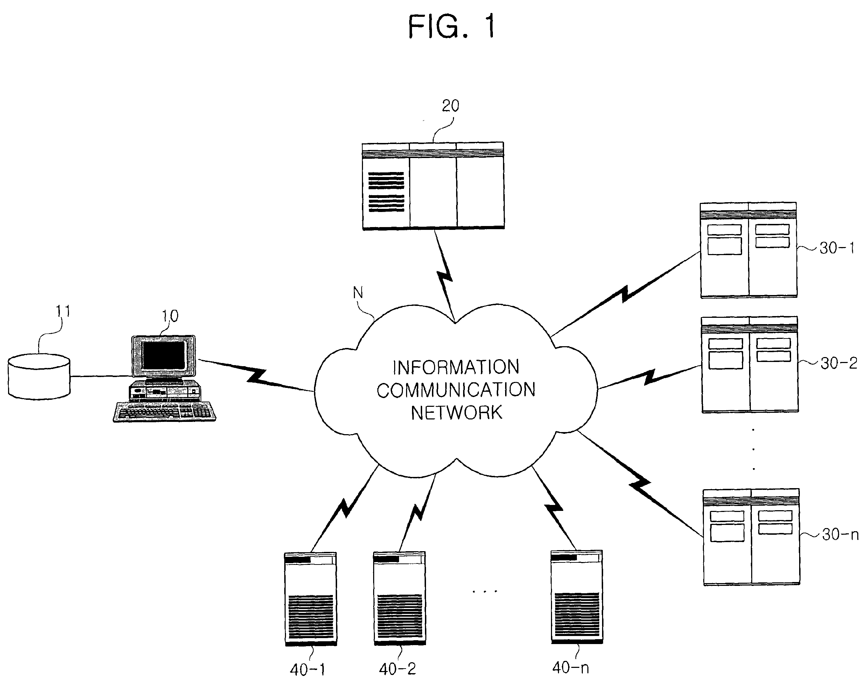

FIG. 1 is a view illustrating a communication system incorporating the present invention. The system incorporating the present invention includes a user terminal 10, a server 20 for updating an integrated search program, a plurality of search service web site operating servers 30-1 to 30-n, a plurality of web site operating servers 40-1 to 40-n, and an information communication network N. Here, the user terminal 10 and the respective servers 20, 30-1 to 30-n, and 40-1 to 40-n can be connected to the information communication network N through diverse apparatuses and methods currently known such as a modem or channel service unit (CSU), and a separate explanation thereof will be omitted since they are well known in the art.
The user terminal 10 and the respective servers 20, 30-1 to 30-n, and 40-1 to 40-n include the typical hardware of the computer system such as main processors, network adapters, display adapters, main storage devices, auxiliary storage devices, etc., not illustrated herein, and the typical software such as operating systems and various kinds of application programs. A separate explanation thereof will be omitted since they are well known in the art.
Generally, the user terminal 10 is a personal computer of a netizen who performs surfing of web sites through the information communication network N. However, the present invention can be applied to any type of terminals such as a personal digital assistant (PDA), Internet connection type game machine for home use, radio Internet connection type portable telephone, etc., that can connect to respective web sites through the information communication network.

However, the user terminal 10 should be provided with at least one user manipulation means such as a key pad, mouse input device, etc., for inputting a search word and connecting to a searched web site when searching a web site. It is preferable that the user terminal is provided with both the keypad and the mouse input device.

In the auxiliary storage device of the user terminal 10 is stored an integrated search program 11 that is software programmed to perform an integrated search using a search engine available on the web. This integrated search program 11 is installed from a mobile type storage medium (for instance, CD-ROM), or is downloaded from the server 20 for updating the integrated search program through the information communication network N to be installed in the auxiliary storage device.

The server 20 for updating the integrated search program transmits the integrated search program 11 to the user terminal 10 through the information communication network N, or transmits the update data for updating the integrated search program 11 installed in the user terminal 10.

The respective search service web site operating server 30-1 to 30-n is a computer system that operates its search engine program in accordance with the search word or search formula inputted from the user who connects to the corresponding web site through the information communication network N, and provides the result of search to the corresponding user terminal.

The respective web site operating server 40-1 to 40-n is a computer system that establishes a web site with a specified domain name, and provides various kinds of contents including an information contents through the established web site.

On the information communication network N, the user terminal 10 and the respective servers 20, 30-1 to 30-n, and 40-1 to 40-n are connected in common, and mutually perform a data communication. The information communication network N may be the Internet or the wireless Internet.

Hereinafter, the operation of the present invention applied to the communication system as constructed above will be explained in detail with reference to FIGS. 1 to 13.

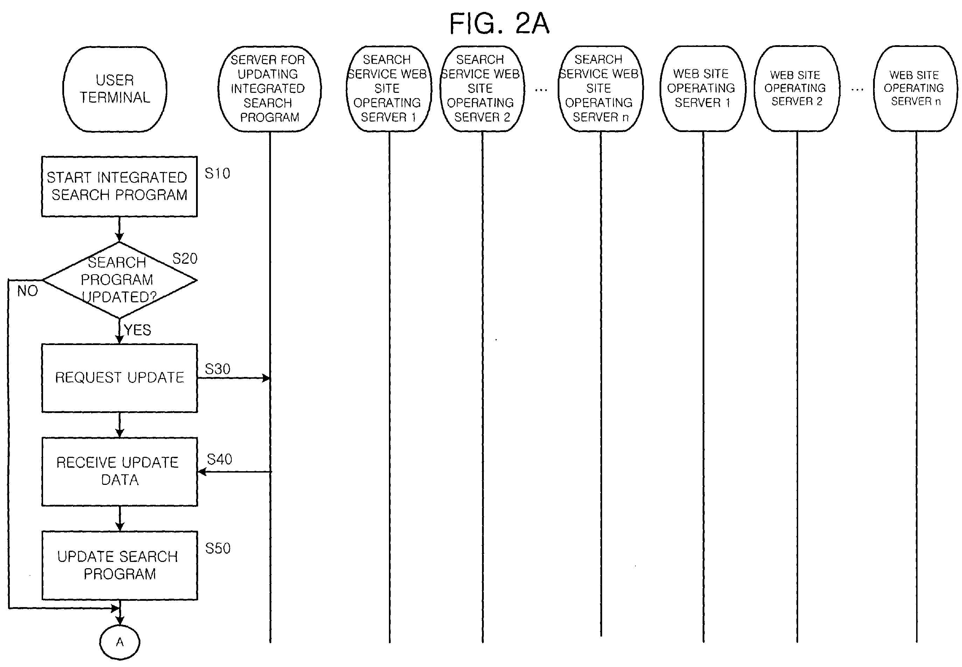

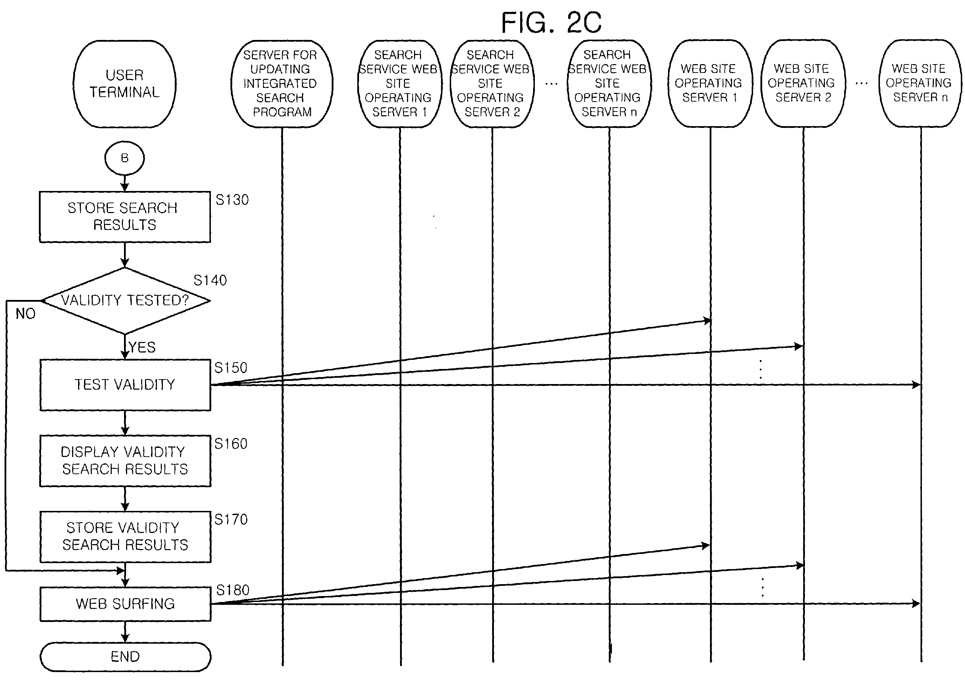

First, the user operates the user terminal 10, and starts the integrated search program 11 stored in the auxiliary storage device (step S10 of FIG. 2A) to start the integrated web site searching method in the communication network according to the present invention. The integrated search program 11 is activated through the main processor built in the user terminal 10. This term is well known in the art, and a separate explanation thereof will be omitted.

According to the started integrated search program 11, the program update time is checked, and it is judged whether to update the program (step S20). Here, the program update time may be a time period determined by a producer that provides the program or by the user. It is preferable that it is programmed to perform the updating of the integrated search program if the user selects the updating even when the determined update time of the program does not elapse.

At step S20, if the program update time does not elapse, a control procedure proceeds to a step S60 of inputting a search word in accordance with the integrated search program 11. On the contrary, if the program update time elapses, the control procedure controls the network adapter of the user terminal 10 through the main processor so that an update request signal is transmitted to the integrated search program updating server 20 (step S30).

At step S30, the integrated search program updating server 20 transmits latest update data to the user terminal 10 through the information communication network N in accordance with the update request signal transmitted from the user terminal 10 (step S40).

Specifically, since the number of search service web sites for providing a search service through a server on the web is increasing day after day and the search service web sites have different patterns of representing the search results respectively, it is necessary to update the data at all times in order to match the search results searched by the respective search service web sites with a specified pattern. For instance, a script command for matching the patterns of the search results of the respective search service web sites, which can be included in the update data of the integrated search program, is as follows.

⌜ Pattern="DT;(B{Extract;};A{Extract;};DD{ExtractBR;};BR;FONT;BR;FONT;);";⌟

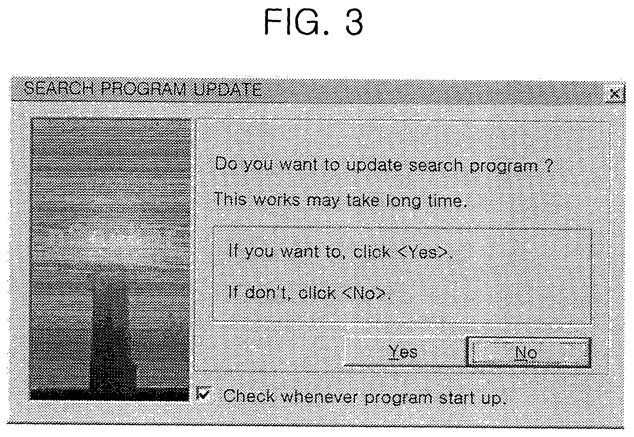

Thereafter, the integrated search program 11 is updated in accordance with the update data transmitted from the integrated search program updating server 20 through the main processor (step S50). At this time, it is preferable to display the user interface screen as shown in FIG. 3 on a display screen of the user terminal 10, so that the user can recognize that the integrated search program is being updated.

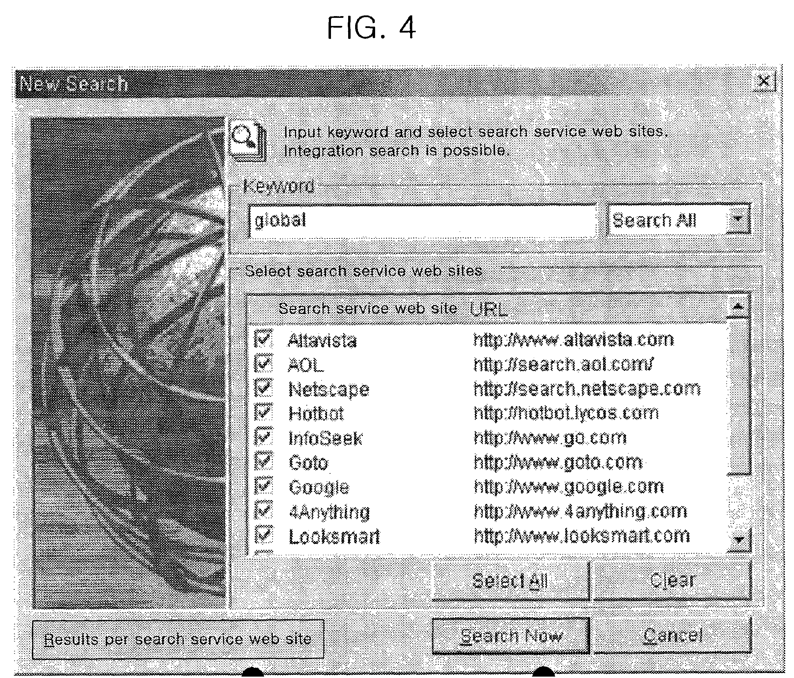

Next, the integrated search program 11 controls the display adapter through the main processor to display the user interface screen as shown in FIG. 4. This user interface screen enables the user to input the search word (step S60) and to select at least one search service web site and search option (for example, a search mode such as search all, search any, exact search, etc.) (step S70). Here, FIG. 4 shows an example of the user interface screen according to the present invention. Through this user interface screen, a search formula in addition to a search word may be inputted.

If the user selects a "search start" (step S80) after the selection of the search service web sites and the search option, the integrated search program 11 controls the network adapter through the main processor to simultaneously transmit data of the search word and the search request signal to the servers 30-1 to 30-n that operate the search service web sites selected by the user at step S70 (step S90). That is, the search word inputted by the user is simultaneously sprayed upon the respective search service web sites on the web. This can be easily implemented through the script command.

The respective search service web site operating servers 30-1 to 30-n, which have received the search word from the user terminal at step S90, operate the respective search engine programs to search the web site notifying the title or document contents that include the search word inputted by the user, and transmit the search results to the user terminal if the search is completed (step S100).

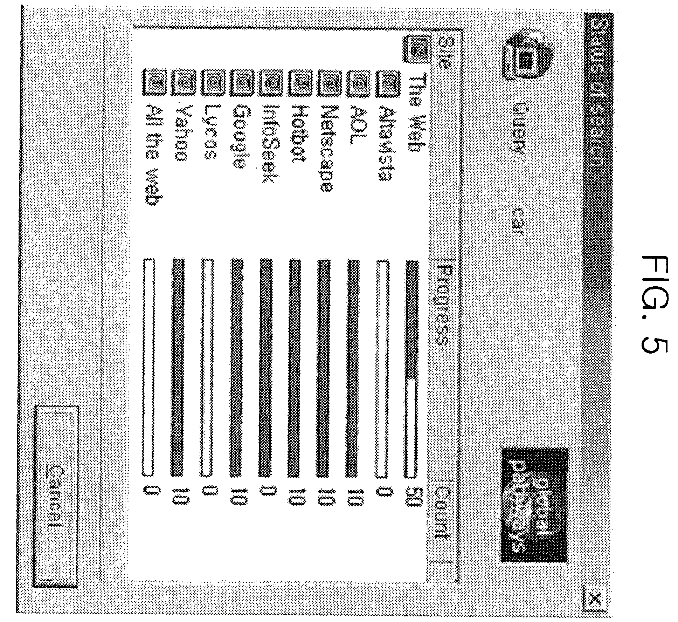

For instance, the integrated search program 11 may display the search results through the user interface screen as shown in FIG. 5.

Next, the integrated search program 11 integrates the search results received from the search service web sites of the respective search service web site operating servers 30-1 to 30-n, and parses them to structurize them in the form of a tree (step S1 10).

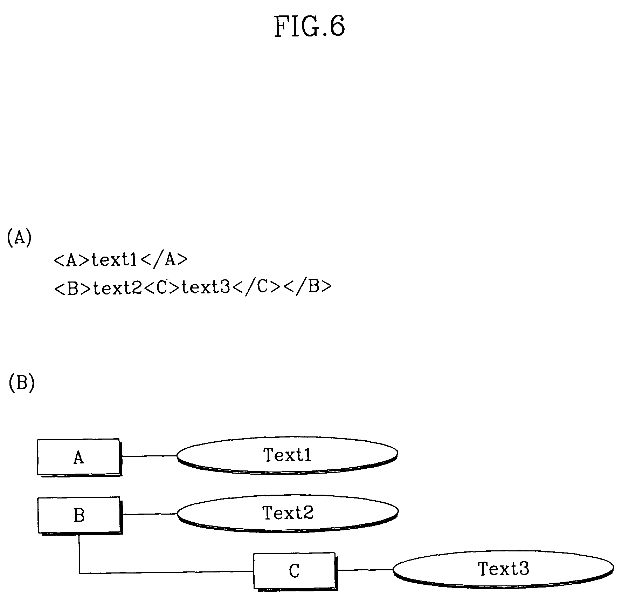

Specifically, the integrated search program 11 restructure the search results in the tree structure having a predetermined pattern by separating the documents (for example, web pages) of the searched web sites by the token. For instance, the document prepared with an "HTML" language as shown in FIG. 6A may be restructured in the form of a tree structure as shown in FIG. 6B. For reference, the token is called a minimal unit of a meaningful word.

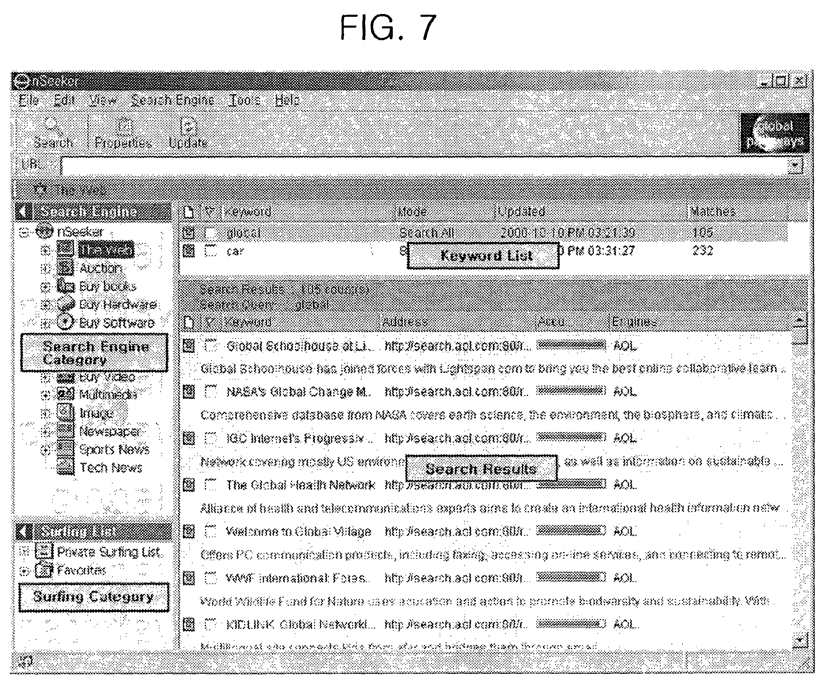

Then, the integrated search program 11 controls the display adapter through the main processor to display the search results restructured to the tree structure at step S110 on the display screen of the user terminal 10 (step S120), and to store the search results in the auxiliary storage device of the user terminal 10 (step S130). The user interface screen for displaying the search results at step S120 may be constructed as shown in FIG. 7.

Here, the existence of the duplicated web sites in the search results searched by the respective search service web sites means a relatively high accuracy and reliability of the web sites. In case of the web sites not duplicated, the accuracy of the search result is displayed with the accuracy provided by the respective search service web sites, and this can be referred to for the user's convenience.

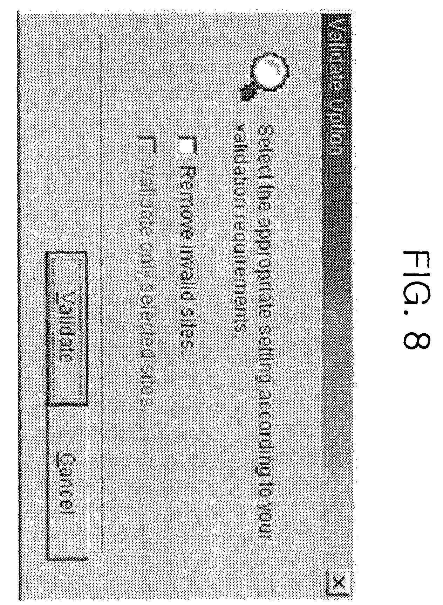

Next, the integrated search program 11 performs the validity test for testing whether the web site searched by the respective search service web sites actually exists on the information communication network N. In this case, a specified user interface screen (for example, of FIG. 8) is displayed to inquire of the user for the proceeding of the test (step S 140).

If the user does not agree to the proceeding of the validity test at step S140, the integrated search program 11 proceeds to a step S180 of performing the web surfing of the searched web sites, while if the user agrees to the proceeding of the validity test, it controls the network adapter through the main processor to send a connection signal simultaneously to the searched web sites to perform the validity test (step S150).

Specifically, the integrated search program 11 attempts an actual connection to the web site searched by the search service web sites, and if the connection is possible, it recognizes the validity of the web site as the actually existing web site, while if the connection is impossible or the web site cannot be searched, it considers the web site as the web site having no validity.

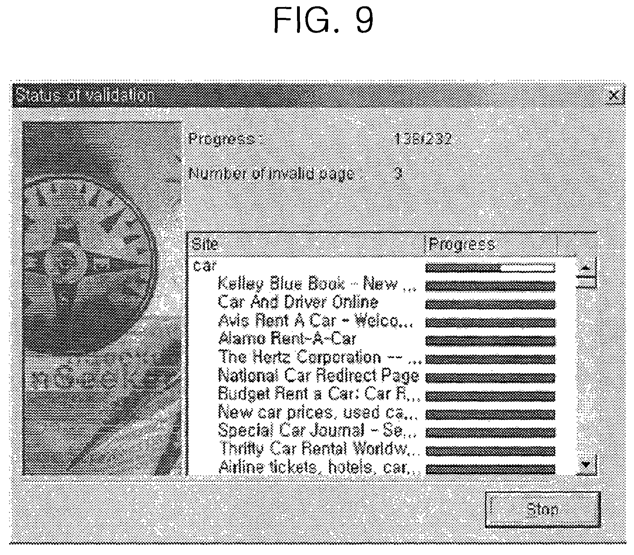

At this time, it is preferable that the integrated search program 11 displays the status of the validity test through the user interface screen as shown in FIG. 9 to enable the user to easily recognize the proceedings of the validity test.

Next, the integrated search program 11 controls the display adapter through the main processor to display the result of the validity test performed at step S150 to the user (step S160), and to store the result of the validity test in the auxiliary storage device of the user terminal (step S170).

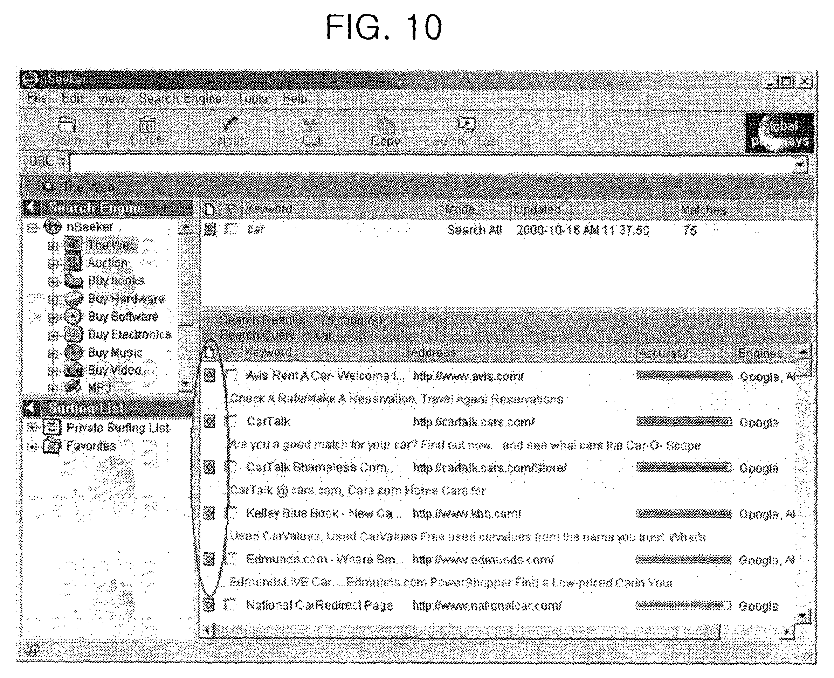

For instance, as shown in FIG. 10, the result of the validity test at step S160 may be displayed using discriminating marks such as a "V" character (in case of having the validity) or "X" character (in case of having no validity) on the list of the searched web sites.

Thereafter, if the user clicks the web site in the search result list, the integrated search program 11 controls the network adapter through the main processor to connect to the server that operates the corresponding web site, and thus the user can perform the web surfing (step S180).

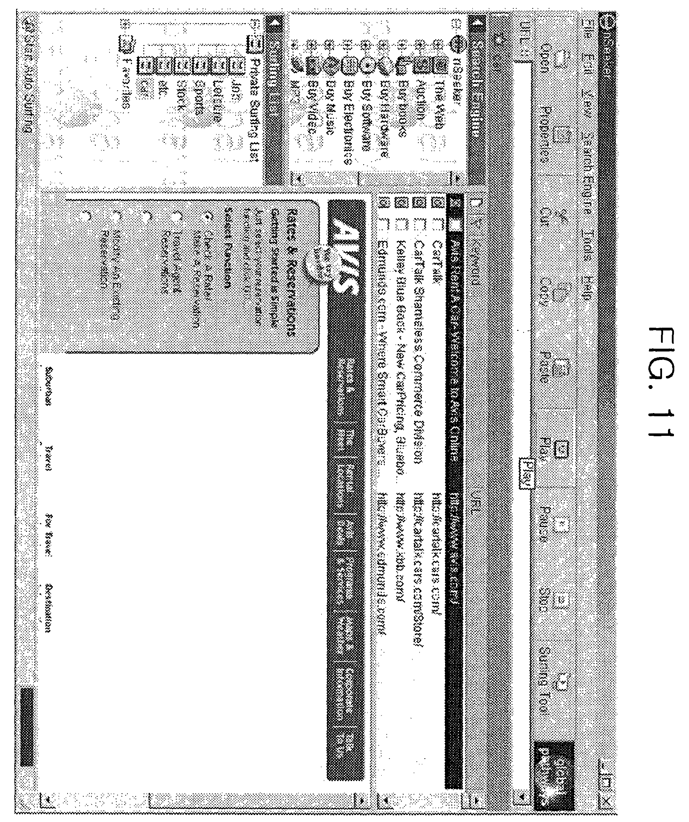

Here, the integrated search program 11 may display the web page of the web site as shown in FIG. 11 by calling a separate browser (for example, "Internet Explore" of "Micro Soft" Company) in a plug-in manner through the user interface screen representing the search result. The plug-in type call of a separate browser on the user interface screen representing the search result is well known in the art, and the detailed explanation thereof will be omitted.

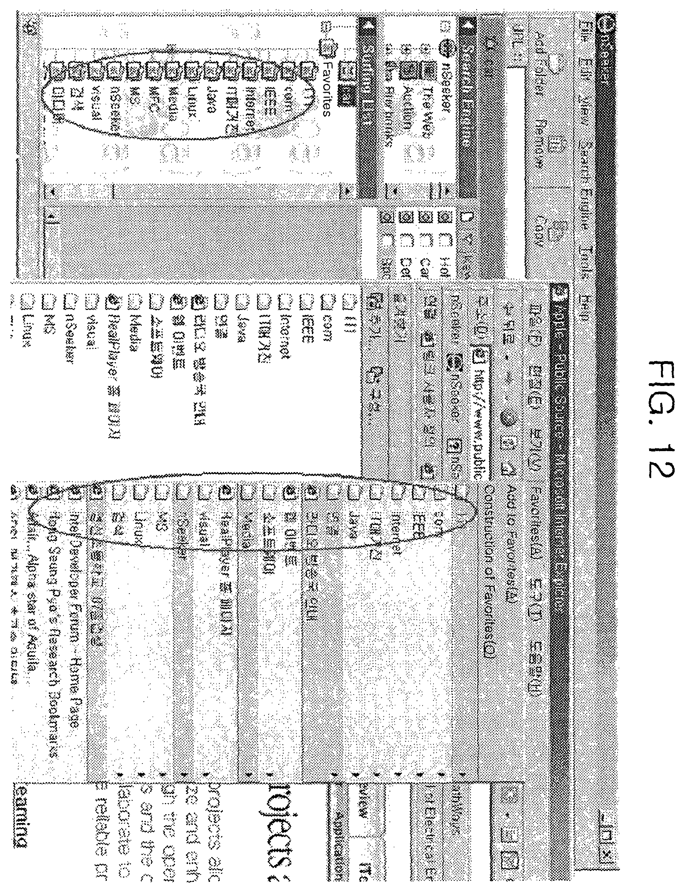

The user may separately book-mark a desired web site among the searched web sites in a private search data list of the user interface screen representing the search result as shown in FIG. 12, or register the search result in the preference search list (i.e., favorites). It is preferable that the preference search list representing the search result is compatible with the preference search menu (i.e., favorites bar) of the separate browser (for example, "Internet Explore" of "Micro Soft" Company). This term is well known in the art, and the detailed explanation thereof will be omitted.

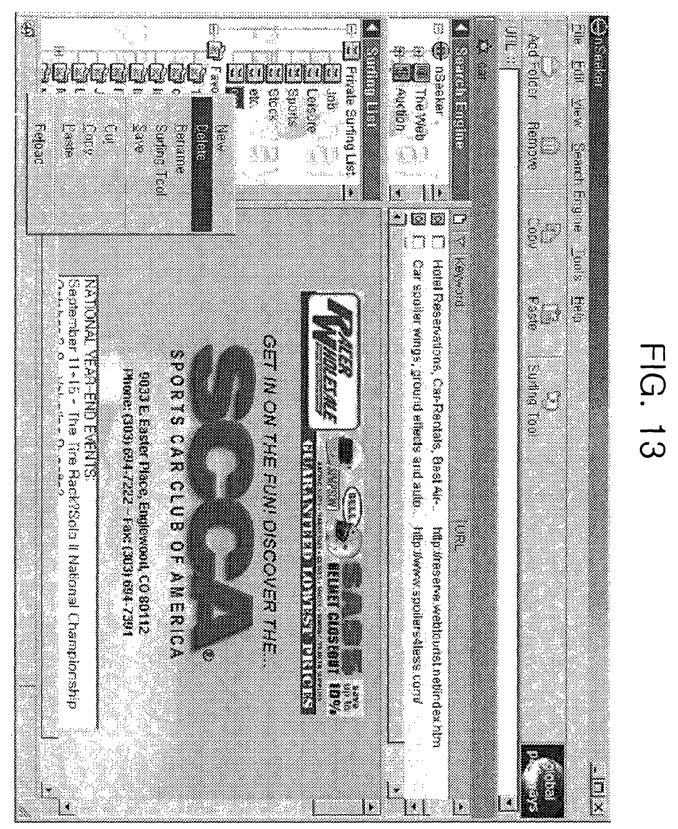

Also, as shown in FIG. 13, the user can freely edit the information book-marked in the private search data list or the preference search list (i.e., favorites) using functions of addition, deletion, change, copy, movement, paste, etc., for each list as shown in FIG. 13. This term is also well known in the art, and the detailed explanation thereof will be omitted.

Next, another embodiment of the present invention will be explained in detail with reference to FIGs. 1 to 14.

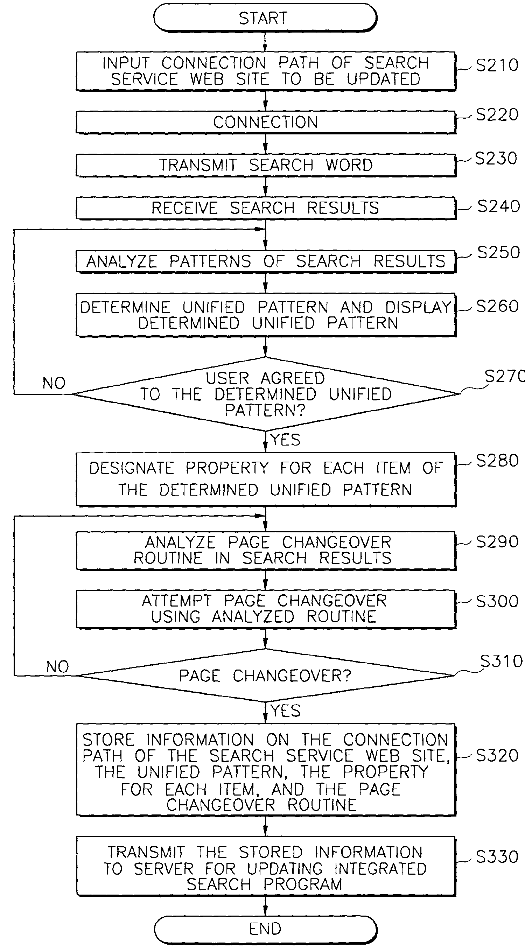

According to another embodiment of the present invention, in addition to the reception of the update data from the integrated search program updating server 20 when the integrated search program 11 is updated, the user can select and connect to the search service web site at his/her discretion to perform the search through the corresponding web site, and update the integrated search program 11 by analyzing the search result. The detailed operation thereof will be explained with reference to FIG. 14.

First, if the user selects a mode for directly updating the integrated search program 11, the integrated search program 11 makes a specified user interface screen on which a connection path, i.e., a uniform resource location (URL), of the search service web site to be updated can be inputted be displayed (step S210). Thereafter, if the user inputs the connection path of the search service web site to be updated, the integrated search program 11 controls the network adapter through the main processor to connect to the search service web site of the connection path inputted by the user (step S220).

At this time, the user inputs the search word through the user interface screen provided from the connected search service web site, and the integrated search program 11 produces and displays to the user a guide message for guiding the input of a comprehensive search word sufficient to produce the search result of 2 pages or more.

The search word inputted by the user is transmitted from the network adapter of the user terminal 10 to the connected search service web site through the information communication network N (step S230), and the search result searched by the corresponding search service web site is transmitted to the user terminal 10 (step S240). The document pattern of the transmitted search result is analyzed by the integrated search program 11 (step S250).

When the document pattern of the search result is analyzed, the integrated search program 11 designates a region where the pattern of the search result is analyzed through a specified guide message to the user. For example, the region where the pattern of the search result may be designated in a manner that the user designates a block by dragging the mouse input device.

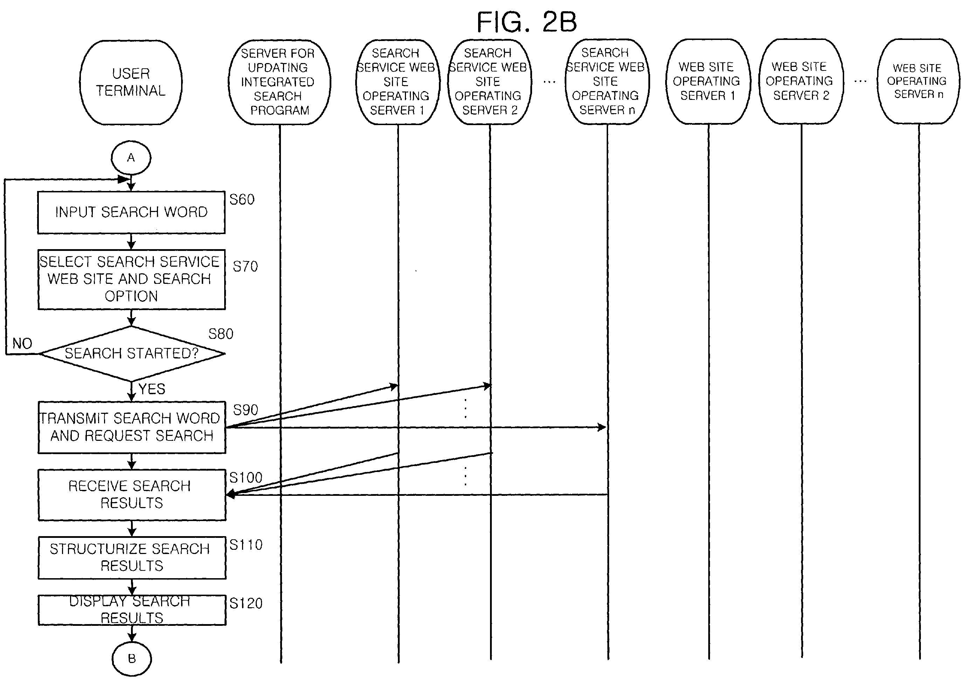

The integrated search program 11 restructures a portion of the page documents among the search result in the region designated by the user to the tree structure by parsing it in the same manner as the structurization of the search results at step S110 of FIG. 2B, and analyzes whether the restructured tree structure is (i.e., coincides with) the repeated pattern in the remaining search results (step S250). If the tree structure does not coincide with the remaining search results, the integrated search program 11 determines the pattern of the unified tree structure by restructizing the tree structure as reducing the range of the pattern until it coincide with the remaining search results, and displays the determined unified pattern (step S260).

Then, the integrated search program 11 displays the user interface screen for obtaining the agreement of the user with respect to the determined unified pattern (step S270). If the user does not agree to the determined unified pattern, the control procedure of the integrated search program 11 proceeds to the step S250, and repeats the procedure of analyzing the pattern of the search result until the user agrees to the determined unified pattern. If the user agrees to the unified pattern, the integrated search program 11 determines properties of respective items of the determined unified pattern (step S280).

Here, the items are called the respective search results searched through the search service web sites, and the property is a kind of document attribute for designating the usage of the respective words or paragraphs included in the document of the item searched by the search service web site. For example, the document paragraph of the item designated as the property of "URL" is used for representing the connection path of the web site, and if the user clicks the document paragraph designated as the property of "URL", the browser operates to connects to the web site of the connection path described in the document paragraph designated as the property of "URL".

[Example of Item]

⌐ Concept Car Introduction

NO.1/NO.2/BUCRANE/DEV4/DEV5/NGV/MYA/SHIRAZ/TACUMA/JOYS  TER/CABRIOLET/MANTICA/MATIZ...

URL:[http://www.dm.co.kr/mall/product/concept/concept.htm]
Size 436bytes-Prepared on Dec. 07, 1999-Korean language」

In more detail, in the item of the search result prepared as the above "example of item", "1" designates the property of 'number', "Concept Car Introduction" designates property of the keyword and URL, "NO.1/NO.2/BUCRANE/DEV4/DEV5/NGV/MYA/SHIRAZ/ TACUMA/JOYSTER/CABRIOLET/MANTICA/MATIZ..." designates the property of 'Description', and "Size 436bytes-Prepared on Dec. 07, 1999-Korean language" designates the property of 'ETC'.

Next, the integrated search program 11 analyzes a page changeover routine from the search result of the corresponding search service web site (step S290). Specifically, the integrated search program 11 designates an icon (refer to the following example of icon) for changing the page from the search result of the search service web site through a specified guide message to the user.

[Example of Page Changeover Icon]

「 ->1 2 3 4 5 6 7 8 9 10 11 12 13 14 15 16 17 18 19 20 [>>]」

The user may designate the icon for changing the page in accordance with the above-described guide message. For example, the user may designate the icon for changing the page in a manner that the user designates a block by dragging the mouse input device.

If the user designates the icon for changing the page, the integrated search program 11 analyzes in what manner the icon designated by the user changes the page.

For example, the page document prepared by the "HTML" language changes it page by a "href" or "Form" tag, and thus the integrated search program 11 analyzes whether the page document is changed by the "href" tag or the "Form" tag.

Next, the integrated search program 11 attempts to change the document page of the search result searched by the search service web site using the page changeover routine analyzed at the step S290 (step S300), and checks whether the page is changed (step S310). If the page is not changed as a result of checking at the step S310, the control procedure of the integrated search program 11 returns to the step S290, and analyzes the page changeover routine again.

On the contrary, If it is checked that the page is changed at the step S310, the integrated search program 11 stores the connection path of the search service web site, the unified pattern of the search result determined at the step S260, the properties of the respective search result items designated at the step S280, and information on the page changeover routine analyzed at the step S290 in the auxiliary storage device of the user terminal 10, and updates and stores the data of the search service web site added by the user using the stored information (step S320). Thereafter, the integrated search program 11 controls the network adapter through the main processor to transmit the update information to the integrated search program updating server 20 (step S330).

The search service web site and the analyzed update information, which are transmitted from the user terminal 10 to the integrated search program updating server 20, are stored and registered in the integrated search program updating server 20. These search service web site and the update information stored in the integrated search program updating server 20 can be downloaded to another user if he/she desires.

As described above, according to the present invention, the time and effort required for searching the web sites having desired information contents using a plurality of search service web sites can be reduced and the very convenient use thereof can be achieved by searching information desired by the user simultaneously through a plurality of search service web sites selected by the user, integrating search results searched by the respective search service web sites, providing the integrated search results to the user, and storing the search results in the storage device of the user terminal.

Also, since the accuracy and reliability for the search results are guided in advance to the user by performing the validity test of the web sites searched by the respective search service web sites, the waste of time caused by the connection to the web site that does not actually exist can be prevented, and thus the information search can be effected more easily. The present invention can update the integrated search program for performing the integrated search through the respective search service web sites periodically or in accordance with the user's selection, and thus enable the integrated search using the search service web sites which are currently updated or newly created.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1.  An integrated web site searching method in a communication network, the method comprising steps of:

    receiving a user input of a search word and selecting at least one search service web site desired by the user;
    transmitting the search word and a search request signal to the respective search service web sites selected by the user through an information communication network;
    receiving search results, which are information of web sites searched in relation to the search word by the respective search service web sites, from the respective search service web sites;
    integrating the search results received from the respective search service web sites; and
    displaying the integrated search results to the user and storing the integrated search results in a storage device of a user terminal.

2.  The integrated web site searching method as claimed in claim 1, further comprising a step of attempting connection to the respective web sites searched by the respective search service web sites in accordance with the user's selection, and testing a validity of the respective search results based on a connection state.

3.  The integrated web site searching method as claimed in claim 1 or 2, further comprising a step of separating page documents of the searched web sites by the token by parsing the page documents, and restructuring the page documents to a tree structure at the integrating step.

4.  A medium wherein software programmed to perform an integrated web site searching method in a communication network is stored, the method comprising steps of:

    displaying a user interface screen for presenting a list of search service web sites that can be selected by a user and permitting the user to input a search word;
    transmitting the search word and a search request signal to the respective search service web sites selected by the user through an information communication network by controlling a network adapter of a user terminal; and
    integrating search results, which are information of web sites searched in relation to the search word by the respective search service web sites, received from the respective search service web sites; and
    displaying the integrated search results to the user and storing the integrated search results in a storage device of a user terminal.

5.  The medium as claimed in claim 4, wherein the software stored in the medium is programmed to further perform the steps of:

    attempting connection to the respective web sites searched by the respective search service web sites in accordance with the user's selection, and testing a validity of the respective search results based on a connection state; and
    displaying a result of the validity test in a search result list.

6.  The medium as claimed in claim 4, wherein the software stored in the medium is programmed to further perform a step of separating page documents of the searched web sites by the token by parsing the page documents, and restructuring the page documents to a tree structure at the integrating step.

7.  The medium as claimed in any one of claims 4 to 6, wherein the software stored in the medium is programmed to further perform a step of connecting to a server for software updating through the information communication network at predetermined intervals or in accordance with the user's selection, receiving software update data from the server for software updating, and being updated by the update data.

8.  The medium as claimed in claim 7, wherein the software stored in the medium is programmed to further perform a self-updating step of connecting to the corresponding search service web site through a connection path inputted by the user if the user inputs the search service web site added by the user and the connection path for the search service web site, analyzing information on a pattern of the search result of the search service web site, a property of the search result by the item, and a page changeover routine, and self-updating data for the search service web site added by the user in accordance with the analyzed information.

9. The medium as claimed in claim 8, wherein the self-updating step comprises the steps of:

connecting to the search service web site with the connection path of the search service web site inputted by the user;

transmitting a search word inputted by the user to the search service web site;

receiving and displaying the search results from the search service web site;

determining a unified pattern effective to all the search results by analyzing patterns of page documents for the search results in a region designated by the user among the displayed search results;

determining properties for each item of the displayed search results;

permitting the user to designate an icon for changing pages from the search results through a guide message;

analyzing a page changeover routine of the page changeover icon designated by the user; and

self-updating the data for the search service web site added by the user according to information on the unified pattern for the search results of the analyzed search service web sites, properties for each item of the respective search results, and the page changeover routine.

10. The medium as claimed in claim 8, wherein the software stored in the medium is programmed to further perform the step of transmitting the update data analyzed for the search service web site added by the user to the server for the updating, and enabling another user to use the update data.

FIG. 1

# FIG. 2A

EP 1 158 425 A2

# FIG. 2B

EP 1 158 425 A2

| USER TERMINAL | SERVER FOR UPDATING INTEGRATED SEARCH PROGRAM | SEARCH SERVICE WEB SITE OPERATING SERVER 1 | SEARCH SERVICE WEB SITE OPERATING SERVER 2 | ... | SEARCH SERVICE WEB SITE OPERATING SERVER n | WEB SITE OPERATING SERVER 1 | WEB SITE OPERATING SERVER 2 | ... | WEB SITE OPERATING SERVER n |

A

INPUT SEARCH WORD — S60

SELECT SEARCH SERVICE WEB SITE AND SEARCH OPTION — S70

SEARCH STARTED? — S80

NO

YES

TRANSMIT SEARCH WORD AND REQUEST SEARCH — S90

RECEIVE SEARCH RESULTS — S100

STRUCTURIZE SEARCH RESULTS — S110

DISPLAY SEARCH RESULTS — S120

B

12

**FIG. 2C**

USER TERMINAL

SERVER FOR UPDATING INTEGRATED SEARCH PROGRAM

SEARCH SERVICE WEB SITE OPERATING SERVER 1

SEARCH SERVICE WEB SITE OPERATING SERVER 2

SEARCH SERVICE WEB SITE OPERATING SERVER n

WEB SITE OPERATING SERVER 1

WEB SITE OPERATING SERVER 2

WEB SITE OPERATING SERVER n

B

STORE SEARCH RESULTS — S130

VALIDITY TESTED? — S140
NO
YES

TEST VALIDITY — S150

DISPLAY VALIDITY SEARCH RESULTS — S160

STORE VALIDITY SEARCH RESULTS — S170

WEB SURFING — S180

END

# FIG. 3

SEARCH PROGRAM UPDATE

Do you want to update search program ?

This works may take long time.

If you want to, click <Yes>.

If don't, click <No>.

Yes      No

☑ Check whenever program start up.

# FIG. 4

EP 1 158 425 A2

**New Search**

Input keyword and select search service web sites.
Integration search is possible.

**Keyword**

| global | Search All ▾ |

**Select search service web sites**

| Search service web site | URL |
|---|---|
| ☑ Altavista | http://www.altavista.com |
| ☑ AOL | http://search.aol.com/ |
| ☑ Netscape | http://search.netscape.com |
| ☑ Hotbot | http://hotbot.lycos.com |
| ☑ InfoSeek | http://www.go.com |
| ☑ Goto | http://www.goto.com |
| ☑ Google | http://www.google.com |
| ☑ 4Anything | http://www.4anything.com |
| ☑ Looksmart | http://www.looksmart.com |

Select All    Clear

Results per search service web site    Search Now    Cancel

Status of search

global pathways

query: car

Site | Progress | Count

The Web | 50
AltaVista | 0
AOL | 10
Netscape | 10
Hotbot | 10
InfoSeek | 0
Google | 10
Lycos | 0
Yahoo | 10
All the web | 0

Cancel

FIG. 5

# FIG.6

(A)

<A>text1</A>
<B>text2<C>text3</C></B>

(B)

FIG. 8

FIG. 9

# FIG. 11

EP 1 158 425 A2

# FIG. 12

FIG. 13

START

INPUT CONNECTION PATH OF SEARCH SERVICE WEB SITE TO BE UPDATED — S210

CONNECTION — S220

TRANSMIT SEARCH WORD — S230

RECEIVE SEARCH RESULTS — S240

ANALYZE PATTERNS OF SEARCH RESULTS — S250

DETERMINE UNIFIED PATTERN AND DISPLAY DETERMINED UNIFIED PATTERN — S260

USER AGREED TO THE DETERMINED UNIFIED PATTERN? — S270

NO

YES

DESIGNATE PROPERTY FOR EACH ITEM OF THE DETERMINED UNIFIED PATTERN — S280

ANALYZE PAGE CHANGEOVER ROUTINE IN SEARCH RESULTS — S290

ATTEMPT PAGE CHANGEOVER USING ANALYZED ROUTINE — S300

PAGE CHANGEOVER? — S310

NO

YES

STORE INFORMATION ON THE CONNECTION PATH OF THE SEARCH SERVICE WEB SITE, THE UNIFIED PATTERN, THE PROPERTY FOR EACH ITEM, AND THE PAGE CHANGEOVER ROUTINE — S320

TRANSMIT THE STORED INFORMATION TO SERVER FOR UPDATING INTEGRATED SEARCH PROGRAM — S330

END